# FASCICULE DE BREVET EUROPEEN

(11) **EP 3 267 663 B1**
(45) Date de publication et mention de la délivrance du brevet: **18.03.2020**
(21) Numéro de dépôt: 17179627.9
(22) Date de dépôt: 04.07.2017
(51) Int. Cl.: H04L 29/08, G06F 9/445

(54) **PROCÉDÉ DE MISE À JOUR D'UNE PLURALITÉ DE VÉHICULES ET ENSEMBLE FORMÉ D'UNE PLURALITÉ DE VÉHICULES FERROVIAIRES ET D'UN SYSTÈME DE GESTION ASSOCIÉ**
VERFAHREN ZUR AKTUALISIERUNG EINER PLURALITÄT VON FAHRZEUGEN UND ENSEMBLE, DIE VON EINER PLURALITÄT VON EISENBAHNFAHRZEUGEN UND EINEM ASSOZIIERTEN MANAGEMENTSYSTEM AUSGEFÜHRT WERDEN
METHOD FOR UPDATING A PLURALITY OF VEHICLES AND ENSEMBLE FORMED BY A PLURALITY OF RAILWAY VEHICLES AND AN ASSOCIATED MANAGEMENT SYSTEM

(30) Priorité: 05.07.2016 FR 1656424
(43) Date de publication de la demande: 10.01.2018
(73) Titulaire: ALSTOM Transport Technologies, 93400 Saint-Ouen (FR)
(72) Inventeur: PLANCHE, Lilian, 69009 Lyon (FR)
(74) Mandataire: Lavoix

(56) Documents cités:
- RADOVAN MIUCIC: "INTELLIGENT COMMUNICATION FOR FUTURE AUTOMOBILE NETWORKS", , 1 janvier 2009 (2009-01-01), XP002767716, Extrait de l'Internet: URL:http://ece.eng.wayne.edu/~smahmud/MySt udents/Dissertation_Radovan.pdf [extrait le 2017-03-01]

## Description

La présente invention concerne un procédé de mise à jour d'une pluralité de véhicules. La présente invention concerne également un ensemble formé d'une pluralité de véhicules et d'un système de gestion de la pluralité de véhicules. Les véhicules sont, par exemple, ferroviaires.

De nombreux véhicules sont équipés d'équipements électroniques permettant de nombreuses fonctions. Par exemple, des équipements de sécurité tels que des systèmes de signalisation, de contrôle de la traction, de gestion de la maintenance, ou encore des équipements réseau, sont fréquemment montés sur de nombreux types de véhicules. D'autres équipements électroniques permettent des fonctions de communication, d'optimisation de la performance et de la consommation énergétique des véhicules, ou encore de surveillance du bon fonctionnement de celui-ci.

Les équipements électroniques des types précités comprennent en général une mémoire sur laquelle sont stockées des données, et en particulier des instructions logicielles qui sont mises en œuvre par un contrôleur pour exécuter lesdites fonctions. De telles instructions logicielles offrent l'avantage de pouvoir être modifiées afin d'améliorer le fonctionnement de l'équipement ou de l'adapter à une modification du véhicule, par exemple si d'autres appareils avec lesquels l'équipement est en interaction sont montés sur le véhicule. Ainsi, il n'est, dans la plupart des cas, pas nécessaire de modifier l'équipement lui-même, mais uniquement d'adapter les instructions logicielles. Une telle modification des instructions logicielles est appelée « mise à jour ».

Cependant, la mise à jour de l'appareil nécessite en général l'intervention d'un technicien spécialisé. Ainsi, soit le technicien doit se déplacer jusqu'au lieu où se trouve le véhicule, soit le véhicule doit être immobilisé au dépôt pour que le technicien effectue la mise à jour. La mise à jour d'un grand nombre de véhicules, par exemple une flotte de véhicules gérés par une régie de transport publics ou une flotte de trains, est donc longue. En outre, elle implique une perte importante de disponibilité des véhicules en question, qui sont en général immobilisés pour mise à jour pendant la journée, pendant les horaires habituels de travail du technicien.

De plus, une période parfois assez longue peut exister pendant laquelle plusieurs versions des mêmes instructions logicielles cohabitent, le temps pour le ou les techniciens de réaliser la mise à jour sur toute la flotte, ce qui complexifie la gestion de la flotte par l'opérateur. Le document RADOVAN MIUCIC: "INTELLIGENT COMMUNICATION FOR FUTURE AUTOMOBILE NETWORKS",1 janvier 2009 (2009-01-01) décrit un algorithme pour des mises a jours du logiciel des véhicules.

Ainsi, il existe un besoin d'un procédé de mise à jour des équipements électroniques d'une flotte de véhicules qui permette une meilleure disponibilité des véhicules.

A cet effet, l'invention a pour objet un procédé de mise à jour d'une pluralité de véhicules, chaque véhicule comportant un serveur embarqué, un premier appareil électronique et au moins un deuxième appareil électronique, le serveur embarqué comprenant une première mémoire et un module de communication radiofréquence et chacun du premier appareil et du deuxième appareil comprenant un contrôleur et une deuxième mémoire stockant un ensemble de données initiales, chaque serveur embarqué étant relié à chacun du premier appareil et du deuxième appareil montés dans le même véhicule par un réseau local de communication interne au véhicule. Le procédé comporte les étapes suivantes :
- transfert de données de mise à jour, à travers un réseau étendu de communication radiofréquence, depuis au moins un serveur au sol vers les serveurs embarqués des véhicules de ladite pluralité, les données de mise à jour comportant des données modifiées destinées à être mémorisées par au moins un du premier appareil et du deuxième appareil de chaque véhicule considéré,
- mémorisation des données de mise à jour dans la première mémoire de chaque véhicule,
- lorsque les données de mise à jour ont été mémorisées dans la première mémoire de chaque véhicule, émission à travers le réseau étendu, par un serveur au sol, d'une commande de mise à jour à destination du serveur embarqué de chaque véhicule, et
- transmission, par chaque serveur embarqué ayant reçu la commande de mise à jour, des données modifiées à au moins un du premier appareil et du deuxième appareil à travers le réseau local correspondant, les données modifiées remplaçant, dans la deuxième mémoire dudit appareil, les données initiales.

Suivant d'autres aspects avantageux de l'invention, le procédé comprend une ou plusieurs des caractéristiques suivantes, prise(s) isolément ou selon toutes les combinaisons techniquement possibles :
- l'étape de transmission comprend les sous-étapes suivantes :
   « envoi d'une demande de mise à jour, par chaque serveur embarqué ayant reçu la commande de mise à jour, à au moins un parmi le premier appareil et le deuxième appareil du même véhicule,
   • renvoi, par ledit appareil, d'une autorisation de mise à jour au serveur embarqué, et
   • remplacement, ledit appareil, des données d'origine par les données modifiées, la sous-étape de remplacement étant mise en œuvre après la réception, par le serveur embarqué, de l'autorisation de mise à jour correspondante ;
- un état actif et un état inactif sont définis pour chaque véhicule de la pluralité, l'état inactif étant représentatif du fait que le véhicule n'est pas en mouvement et l'état actif étant représentatif du fait que le véhicule est en mouvement, au moins un du premier appareil et du deuxième appareil étant configuré pour, lors de la sous-étape de renvoi, renvoyer l'autorisation si le véhicule est dans l'état inactif et, si ledit véhicule est dans l'état actif, attendre que ledit véhicule bascule dans l'état inactif pour renvoyer l'autorisation ;
- à l'étape d'émission, la commande de mise à jour est émise simultanément par le serveur au sol à destination de chaque serveur embarqué de la pluralité de véhicules ;
- l'étape de transmission est mise en œuvre successivement pour le premier appareil et le deuxième appareil d'un même véhicule selon un ordre prédéterminé ;
- à l'étape d'émission, la commande de mise à jour est émise successivement par le serveur au sol à destination de chaque serveur embarqué de la pluralité de véhicules ;
- l'étape de transmission est mise en œuvre simultanément pour le premier appareil et le deuxième appareil d'un même véhicule ;
- le premier appareil est configuré pour transmettre des informations entre le deuxième appareil et le serveur embarqué, les données de mise à jour comprenant des premières données modifiées destinées à être mémorisées dans la deuxième mémoire du premier appareil et des deuxièmes données modifiées destinées à être mémorisées dans la deuxième mémoire du deuxième appareil, les deuxièmes données modifiées étant transmises au deuxième appareil au cours de l'étape de transmission, aucune première donnée modifiée n'étant transmise au premier appareil avant que les deuxièmes données modifiées n'aient été intégralement mémorisées par le deuxième appareil ;
- les données de mise à jour sont réparties en un ensemble de paquets de données et, au cours de l'étape de transfert, un ensemble de messages de transfert est émis par le serveur au sol à destination de chaque serveur embarqué, chaque message de transfert comportant un paquet de données et une somme de contrôle, le serveur embarqué étant configuré pour calculer chaque somme de contrôle à partir du paquet de données correspondant, et pour comparer la somme de contrôle calculée à la somme de contrôle contenue dans le message de transfert, chaque somme de contrôle calculée par chaque serveur embarqué étant, en outre transmise au serveur au sol, le serveur au sol comparant chaque somme de contrôle reçue à la somme de contrôle transférée avec le message de transfert correspondant ;
- le début de l'étape d'émission est décalé de la fin de l'étape de transfert d'une durée temporelle supérieure ou égale à 5 secondes.

L'invention a également pour objet un ensemble formé d'une pluralité de véhicules ferroviaires et d'un système de gestion de la pluralité de véhicules ferroviaires, chaque véhicule ferroviaire comportant un serveur embarqué, un premier appareil électronique et au moins un deuxième appareil électronique, le serveur embarqué comprenant une première mémoire et un module de communication radiofréquence et chacun du premier appareil et du deuxième appareil comprenant un contrôleur et une deuxième mémoire stockant un ensemble de données initiales, chaque serveur embarqué étant relié à chacun du premier appareil et du deuxième appareil par un réseau local de communication interne au véhicule, et le système de gestion comportant un serveur au sol. Le serveur au sol est configuré pour :
- transférer, par communication radiofréquence, des données de mise à jour au serveur embarqué de chaque véhicule à travers le réseau étendu, les données de mise à jour comportant des données modifiées destinées à être mémorisées dans la deuxième mémoire d'au moins un du premier appareil et du deuxième appareil, et pour
- émettre, à travers le réseau étendu, une commande de mise à jour à destination du serveur embarqué de chaque véhicule (de la pluralité de véhicules lorsque les données de mise à jour ont été mémorisées dans la première mémoire de chaque véhicule ayant reçu les données de mise à jour,
et chaque serveur embarqué est configuré pour :
- mémoriser les données de mise à jour dans la première mémoire, et
- à la suite de la réception de la commande de mise à jour, transmettre les données modifiées à au moins un parmi le premier appareil et le deuxième appareil à travers le réseau local correspondant, les données modifiées remplaçant, dans la deuxième mémoire dudit appareil, les données initiales.

Les caractéristiques et avantages de l'invention apparaitront à la lecture de la description qui va suivre, donnée uniquement à titre d'exemple non limitatif, et faite en référence aux dessins annexés, sur lesquels :
- la figure 1 est une représentation schématique d'un ensemble formé d'une pluralité de véhicules ferroviaires et d'un système de gestion de la pluralité de véhicules selon l'invention, et
- la figure 2 est un ordinogramme des étapes d'un procédé selon l'invention de mise à jour des véhicules représentés sur la figure 1.

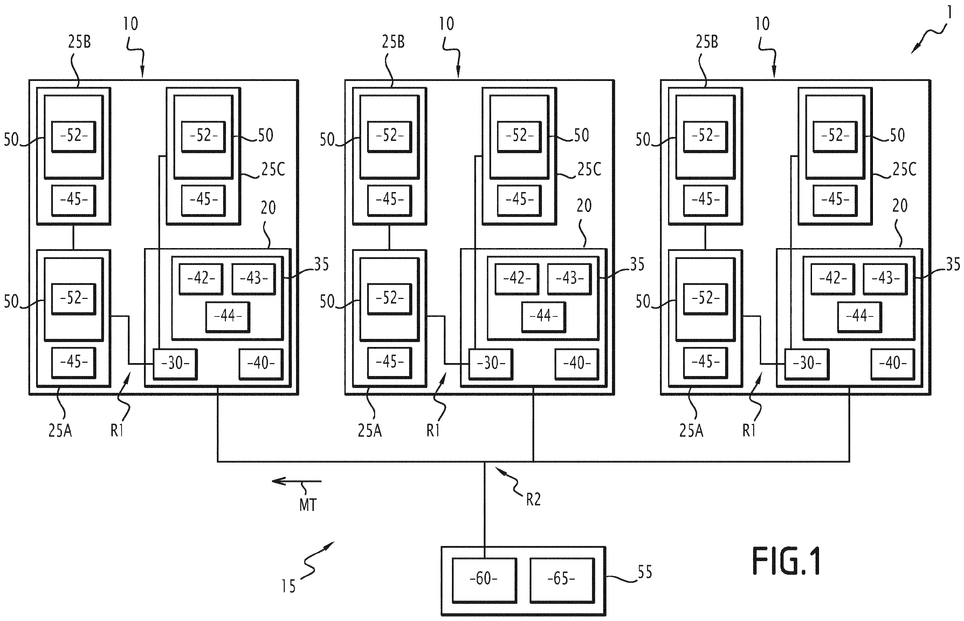

On décrit un ensemble 1 selon l'invention en référence à la figure 1. L'ensemble 1 comprend une pluralité de véhicules 10 et un système de gestion 15 de la pluralité de véhicules 10.

Chaque véhicule 10 est un véhicule ferroviaire. Par exemple, chaque véhicule 10 est un train. En variante, chaque véhicule 10 est une voiture d'un train comportant plusieurs voitures. Selon une autre variante, chaque véhicule 10 est un tramway.

Selon une autre variante, chaque véhicule 10 est un véhicule routier, par exemple un autobus.

Un état actif est défini pour chaque véhicule 10. L'état actif est représentatif du fait que le véhicule 10 est en mouvement. Par exemple, le véhicule 10 est dans l'état actif lorsqu'un moteur du véhicule 10 est allumé. En variante, le véhicule 10 est dans l'état actif lorsque le moteur du véhicule 10 est alimenté.

Un état inactif est défini pour chaque véhicule 10. L'état inactif est représentatif du fait que le véhicule 10 n'est pas en mouvement. Par exemple, le véhicule 10 est dans l'état inactif lorsqu'un moteur du véhicule 10 est éteint. En variante, le véhicule 10 est dans l'état inactif lorsque le moteur du véhicule 10 n'est pas alimenté.

En variante, il est défini des plages horaires au cours desquelles le véhicule 10 est susceptible d'être en service commercial et des plages horaires au cours desquelles le véhicule 10 est au garage, et le véhicule 10 est dans l'état inactif uniquement au cours des plages horaires pendant lesquelles le véhicule 10 est au garage. Ces plages horaires sont par exemple entrées manuellement par un opérateur ou sont fournies par un système de gestion de la flotte de véhicules 10.

Chaque véhicule 10 comporte un serveur embarqué 20 et une pluralité d'appareils électroniques 25. Par exemple, chaque véhicule 10 comporte un premier appareil 25A, un deuxième appareil 25B et un troisième appareil 25C. En variante, chaque véhicule 10 comporte un premier appareil 25A et au moins un deuxième appareil 25B.

Chaque serveur embarqué 20 est configuré pour échanger des informations avec au moins un appareil 25A, 25B, 25C monté dans le même véhicule 10. Par exemple, chaque serveur embarqué 20 est configuré pour échanger des informations avec chaque appareil 25A, 25B, 25C monté dans le même véhicule 10. En particulier, chaque serveur embarqué 20 est connecté aux appareils 25A, 25B, 25C montés dans le même véhicule 10 par un réseau local R1.

Chaque serveur embarqué 20 est, en outre, configuré pour échanger des informations avec le système de gestion 15. Par exemple, chaque serveur embarqué 20 appartient à un réseau étendu R2 de communication.

Chaque serveur embarqué 20 comporte un module de communication radiofréquence 30, une première mémoire 35 et un calculateur 40.

Le module de communication radiofréquence 30 est configuré pour émettre ou recevoir des données transmises via un signal comportant au moins une onde électromagnétique radiofréquence OEM.

De préférence, le module de communication radiofréquence 30 est propre à émettre et à recevoir des données transmises via un signal comportant au moins une onde électromagnétique radiofréquence OEM.

Les ondes électromagnétiques radiofréquences OEM sont les ondes électromagnétiques présentant une fréquence comprise entre 3 kilohertz (kHz) et 6 gigahertz (gHz).

Le module de communication radiofréquence 30 est configuré pour recevoir, à travers le réseau étendu R2, des données de mise à jour Dm de la part du système de gestion 15. Par exemple, le module de communication radiofréquence 30 est configuré pour recevoir, à travers le réseau étendu R2, au moins un message de transfert MT du système de gestion 15.

Les données de mise à jour Dm comportent des données modifiées Mo1, Mo2, Mo3 destinées à être mémorisées dans la mémoire d'au moins un appareil 25A, 25B, 25C.

Les données de mise à jour Dm sont réparties en un ensemble de paquets de données P.

Il est entendu par « paquet de données » un ensemble de données transmises dans un seul message de transfert.

Chaque message de transfert MT contient un paquet de données P et une somme de contrôle SC. En complément facultatif, chaque message de transfert MT contient un identifiant d'un serveur embarqué 20 ou du véhicule 10 qui comporte ledit serveur embarqué 20, auquel le message de transfert MT est destiné.

Une somme de contrôle SC (également appelée « *checksum* » en anglais, parfois aussi appelée « empreinte »), est un nombre qui est ajouté à un message à transmettre pour permettre au récepteur de vérifier que le message reçu est bien celui qui a été envoyé. Par exemple, la somme de contrôle SC est un nombre calculé à partir des données à transmettre, de telle manière qu'une modification des données transmises induit une modification de la somme de contrôle SC calculée.

La première mémoire 35 est apte à stocker un logiciel d'envoi, un logiciel de calcul et un logiciel de remplacement.

Chaque réseau local R1 est un réseau informatique tel que les éléments qui appartiennent au réseau local s'envoient des trames de données au niveau de la couche de liaison sans utiliser d'accès à internet.

Chaque réseau local R1 est, par exemple, un réseau LAN (de l'anglais *local area network*), qui signifie « réseau local ».

Chaque réseau local R1 est, par exemple, un réseau filaire tel qu'un réseau Ethernet utilisant un protocole TCP/IP. La suite TCP/IP est l'ensemble des protocoles utilisés pour le transfert des données sur Internet. Elle est souvent appelée TCP/IP, d'après le nom de ses deux premiers protocoles : TCP (Transmission Control Protocol) et IP (Internet Protocol). Ces protocoles sont décrits dans le document de référence RFC 1122.

En variante, chaque réseau local R1 est un réseau sans fil, par exemple un réseau Wi-Fi. Le Wi-Fi est un ensemble de protocoles de communication sans fil régis par les normes du groupe IEEE 802.11 (ISO/CEI 8802-11). Chaque réseau local R1 est un réseau interne au véhicule 10 considéré. En particulier, seuls des dispositifs montés dans le véhicule 10 considéré sont aptes à échanger des données à travers le réseau local R1.

Le réseau étendu R2 diffère du réseau local R1, dans le sens où le réseau global R2 couvre une zone géographique supérieure au réseau local R1.

Le réseau étendu R2 est, par exemple, un réseau WAN (de l'anglais *wide area network*), qui signifie « réseau étendu ». Dans l'exemple de la figure 1 le réseau étendu R2 est représenté en filaire mais il est clair qu'en variante le réseau étendu R2 est un réseau sans-fils.

De préférence, le réseau étendu R2 est un réseau de téléphonie mobile. Cela signifie que le réseau étendu R2 est configuré pour permettre l'échange de données de téléphonie par ondes électromagnétiques radiofréquences.

Par exemple, le réseau étendu R2 est un réseau de téléphonie mobile conforme au standard GSM établi par l'Institut Européen des Normes de Télécommunication (ou « *European Telecommunications Standards Institute* »), au standard UMTS ou encore au standard LTE.

L'Universal Mobile Télécommunications System (UMTS) est l'une des technologies de téléphonie mobile de troisième génération (3G). UMTS est défini par le « 3rd Génération Partnership Project » (3GPP)

Le LTE (Long Term Evolution) est une évolution des normes de téléphonie mobile GSM et UMTS, définie elle aussi par le 3GPP.

En variante, le réseau étendu R2 est un réseau Wi-Fi.

Le logiciel d'envoi est configuré pour envoyer, par le réseau local R1, une demande de mise à jour à au moins un parmi le premier appareil 25A, le deuxième appareil 25B et le troisième appareil 25C du véhicule 10.

Le logiciel de calcul est configuré pour calculer, à partir du paquet de données P contenu dans chaque message de transfert MT, la somme de contrôle SC. Le logiciel de calcul est, en outre, configuré pour comparer chaque somme de contrôle SC calculée à la somme de contrôle SC contenue dans le message de transfert MT correspondant.

Le logiciel de remplacement est configuré pour remplacer des données mémorisées dans la deuxième mémoire d'au moins un parmi le premier appareil 25A, le deuxième appareil 25B et le troisième appareil 25C par les données modifiées Mo1, Mo2, Mo3.

Lorsqu'ils sont exécutés sur le calculateur 40, le logiciel d'envoi, le logiciel de calcul et le logiciel de remplacement forment respectivement un module 42 d'envoi d'une demande de mise à jour, un module 43 de calcul d'une somme de contrôle SC et un module de remplacement 44.

Chacun du premier appareil 25A, du deuxième appareil 25B et du troisième appareil 25C est un appareil électronique. En particulier, chacun du premier appareil 25A, du deuxième appareil 25B et du troisième appareil 25C est configuré pour manipuler et/ou transformer des données représentées comme des quantités électroniques ou physiques dans des registres d'un contrôleur et/ou dans des mémoires en d'autres données similaires correspondant à des données physiques dans des mémoires, des registres ou d'autres types de dispositifs d'affichage, de transmission ou de mémorisation.

Chacun du premier appareil 25A, du deuxième appareil 25B et du troisième appareil 25C comporte un contrôleur 45 et une deuxième mémoire 50.

Par exemple, le premier appareil 25A est un commutateur réseau.

Par exemple, le deuxième appareil 25B est un calculateur de traction propre à commander un moteur du véhicule 10.

Par exemple, le troisième appareil 25C est un calculateur de signalisation propre à échanger des signaux de signalisation avec des appareils externes au véhicule 10.

En variante, le troisième appareil 25C est un calculateur de freinage propre à commander le freinage du véhicule 10.

Chacun du premier appareil 25A, du deuxième appareil 25B et du troisième appareil 25C appartient au réseau local R1.

Selon l'exemple de la figure 1, le premier appareil 25A et le troisième appareil 25C sont configurés pour échanger directement des informations avec le serveur embarqué 20 correspondant à travers le réseau local R1. Il est entendu par « échanger directement » que les informations transmises sont transmises entre l'appareil considéré et le serveur embarqué 20 sans passer par un appareil électronique intermédiaire. Par exemple, le premier appareil 25A et le troisième appareil 25C sont chacun reliés au serveur 20 par un unique câble de connexion.

Le premier appareil 25A joue le rôle de relais de communication entre le deuxième appareil 25B et le serveur embarqué 20. Cela signifie que le premier appareil 25A est configuré pour transmettre des informations entre le deuxième appareil 25B et le serveur embarqué 20 correspondant. En particulier, le premier appareil 25A est configuré pour recevoir des informations du deuxième appareil 25B et pour transmettre lesdites informations au serveur embarqué 20 correspondant. Le premier appareil 25A est, en outre, configuré pour recevoir des informations du serveur embarqué 20 et pour transmettre lesdites informations au deuxième appareil 25B.

Par exemple, le réseau local R1 est un réseau en anneau. Le premier appareil 25A, le deuxième appareil 25B, le troisième appareil 25C et le serveur embarqué 20 sont alors chacun relié à deux autres éléments du premier réseau R1, le serveur embarqué 20 étant relié en particulier au premier appareil 25A et au troisième appareil 25C.

En variante, le premier réseau R1 est un réseau en étoile.

Le contrôleur 45 de chacun du premier appareil 25A, du deuxième appareil 25B et du troisième appareil 25C est configuré pour mettre en œuvre une fonction prédéterminée lorsque des instructions logicielles sont exécutées sur le contrôleur 45. Par exemple, le contrôleur 45 est configuré pour générer un signal de commande analogique ou numérique d'un actionneur du véhicule 10.

La deuxième mémoire 50 de chaque appareil 25A, 25B, 25C est configurée pour stocker des données initiales.

La deuxième mémoire 50 est apte à mémoriser un logiciel d'autorisation.

Chaque logiciel d'autorisation est configuré pour accepter ou refuser une demande de mise à jour et pour communiquer, selon le cas, une autorisation de mise à jour ou un refus au serveur embarqué 20.

L'autorisation est, par exemple, un message comprenant un indicateur de l'appareil 25A, 25B, 25C considéré.

En complément facultatif, le logiciel d'autorisation d'au moins un parmi le premier appareil 25A, le deuxième appareil 25B et le troisième appareil 25C est configuré pour détecter l'état du véhicule 10 et pour renvoyer l'autorisation en fonction de l'état du véhicule 10. Par exemple, au moins un des logiciels d'autorisation comprend un indicateur de l'état du véhicule 10. L'indicateur est, par exemple, un ensemble de données égales à zéro si le véhicule 10 est dans l'état actif et égales à un si le véhicule 10 est dans l'état inactif.

Par exemple, le logiciel d'autorisation du troisième appareil 25C est configuré pour renvoyer l'autorisation correspondante si le véhicule 10 est dans l'état inactif. Le logiciel d'autorisation du troisième appareil 25C est configuré pour, si le véhicule 10 est dans l'état actif, attendre que le véhicule 10 bascule dans l'état inactif pour renvoyer l'autorisation. En d'autres termes, le logiciel d'autorisation du troisième appareil 25C est configuré pour, si le véhicule 10 est dans l'état actif, refuser la mise à jour.

Cela est par exemple le cas si le troisième appareil 25C est un calculateur de traction, un calculateur de freinage ou encore un calculateur de signalisation.

Lorsqu'il est exécuté sur le calculateur 40, le logiciel d'autorisation forme un module 52 d'autorisation.

Le système de gestion 15 est configuré pour commander la mise à jour d'au moins un parmi le premier appareil 25A, le deuxième appareil 25B et le troisième appareil 25C de chaque véhicule 10.

Le système de gestion 15 comporte au moins un serveur au sol 55. Par exemple, le système de gestion 15 comporte deux serveurs au sol 55. De préférence, le système de gestion 15 comporte un unique serveur au sol 55.

Le serveur au sol 55 diffère de chaque serveur embarqué 20 en ce que le serveur au sol 55 n'est pas embarqué dans un des véhicules 10. Par exemple, le serveur au sol 55 est fixe par rapport à un bâtiment dans lequel le serveur au sol 55 est monté.

En variante, le serveur au sol 55 est mobile. Par exemple, le serveur au sol 55 est mobile par rapport à un bâtiment dans lequel le serveur au sol 55 est monté.

Le serveur au sol 55 est configuré pour mémoriser les données de mise à jour Dm et pour transmettre les données de mise à jour Dm, à travers le réseau étendu R2, à au moins un des serveurs embarqués 20. De préférence, le serveur au sol 55 est configuré pour transmettre les données de mise à jour Dm, à travers le réseau étendu R2, à chaque serveur embarqué 20 de la pluralité de véhicules 10.

Les données de mise à jour Dm comportent les données modifiées Mo1, Mo2, Mo3 destinées à être mémorisées dans la deuxième mémoire 50 d'au moins un parmi le premier appareil 25A, le deuxième appareil 25B et le troisième appareil 25C.

Par exemple, les données de mise à jour Dm comportent des premières données modifiées Mo1, des deuxièmes données modifiées Mo2 et des troisièmes données modifiées Mo3. Les premières données modifiées Mo1 sont destinées à être mémorisées dans la deuxième mémoire 50 du premier appareil 25A de chaque véhicule 10. Les deuxièmes données modifiées Mo2 sont destinées à être mémorisées dans la deuxième mémoire 50 du deuxième appareil 25B de chaque véhicule 10. Les troisièmes données modifiées Mo3 sont destinées à être mémorisées dans la deuxième mémoire 50 du troisième appareil 25C de chaque véhicule 10.

En variante, les données de mise à jour Dm comportent les premières données modifiées Mo1 et les deuxièmes données modifiées Mo2.

Le serveur au sol 55 comporte un module de transfert 60 et une troisième mémoire 65. Avantageusement, le serveur au sol 55 comprend également un module de communication radiofréquence.

Le module de transfert 60 est configuré pour transmettre les données de mise à jour Dm, à travers le réseau étendu R2, à au moins un des serveurs embarqués 20. En particulier, le module de transfert 60 est configuré pour transmettre chaque message de données MT audit serveur embarqué 20.

Le module de transfert 60 est, en outre, configuré pour recevoir d'au moins un des serveurs embarqués 20 chaque somme de contrôle SC calculée par ce serveur embarqué 20.

Le module de transfert 60 est configuré pour émettre, par exemple à la demande d'un opérateur, à travers le réseau étendu R2, une commande de mise à jour à destination du serveur embarqué 20 d'au moins un des véhicules 10 lorsque les données de mise à jour Dm ont été mémorisées dans chaque serveur embarqué 20.

La troisième mémoire 65 est apte à mémoriser les données modifiées Mo1, Mo2, Mo3.

La troisième mémoire 65 est, en outre, apte à mémoriser un logiciel de commande, et un logiciel de comparaison.

Le logiciel de commande est configuré pour commander la mise à jour, par au moins un serveur embarqué 20, d'au moins un appareil 25A, 25B, 25C correspondant.

Le logiciel de comparaison est configuré pour comparer une somme de contrôle SC calculée par le module de calcul 43 à une somme de contrôle stockée dans la troisième mémoire 65.

Lorsqu'ils sont exécutés sur un calculateur du serveur au sol 55, le logiciel de commande et le logiciel de comparaison forment respectivement un module de commande et un module de comparaison.

Le fonctionnement de l'ensemble formé par la pluralité de véhicules 10 et le système de gestion 15 va maintenant être décrit.

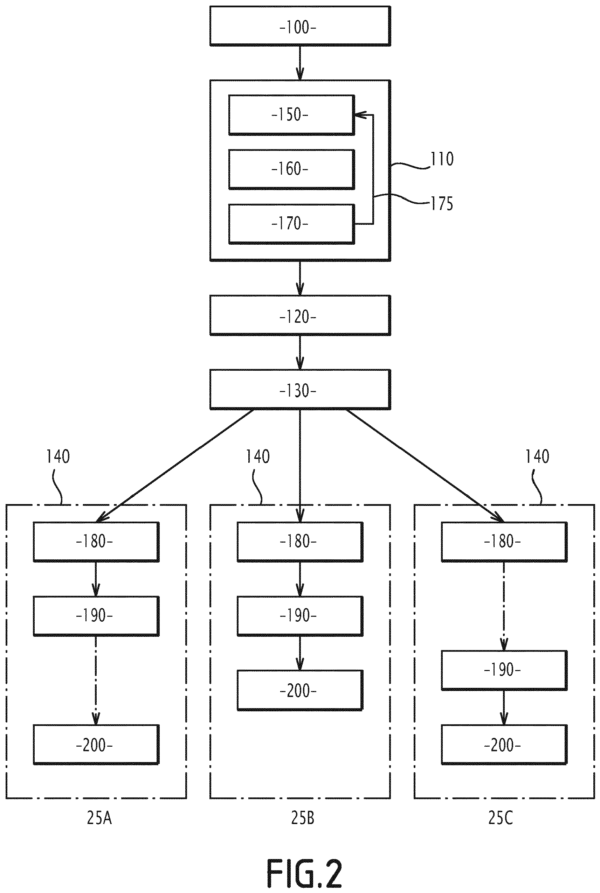

Un ordinogramme d'un procédé de mise à jour de la pluralité de véhicules 10 a été représenté sur la figure 2. Le procédé de mise à jour comprend une étape 100 d'initialisation, une étape 110 de transfert, une étape 120 de mémorisation, une étape 130 d'émission et une étape 140 de transmission.

Au cours de l'étape 100 d'initialisation, un utilisateur U du système de gestion 15 ordonne le transfert des données de mise à jour d'au moins un véhicule 10. Par exemple, l'utilisateur U entre une liste d'au moins un véhicule 10 à mettre à jour. En variante ou en complément, l'utilisateur U entre une liste d'au moins deux véhicules 10 à mettre à jour. En variante, l'utilisateur U demande la mise à jour de chaque véhicule 10 de la pluralité de véhicules 10.

Au cours de l'étape 100 d'initialisation, la deuxième mémoire 45 de chacun du premier appareil 25A, du deuxième appareil 25B et du troisième appareil 25C contient un ensemble de données initiales. Les données initiales comprennent les instructions logicielles destinées à être exécutées sur le contrôleur 45 correspondant.

Ensuite, au cours de l'étape 110 de transfert, les données de mise à jour Dm sont transférées au serveur embarqué 20 de chaque véhicule 10 de la liste.

Les données de mise à jour Dm sont, par exemple, transférées selon un protocole FTP ou SFTP. *File Transfer Protocol* (protocole de transfert de fichiers), ou FTP, est un protocole de communication destiné à l'échange informatique de fichiers sur un réseau TCP/IP. FTP permet, depuis un ordinateur, de copier des fichiers vers un autre ordinateur du réseau, ou encore de supprimer ou de modifier des fichiers sur cet ordinateur.

En variante, les données de mise à jour Dm sont transmises selon un protocole HTTP ou HTTPS. L'HyperText Transfer Protocol, plus connu sous l'abréviation HTTP - littéralement « protocole de transfert hypertexte » - est un protocole de communication client-serveur développé pour le World Wide Web.

L'étape de transfert 110 comporte une sous-étape 150 de transfert, une sous-étape 160 de calcul et une sous-étape 170 de renvoi.

Au cours de la sous-étape 150 de transfert, un message de transfert MT est transmis à un serveur 20 de la liste, par communication radiofréquence, par le module de transfert 60 du serveur au sol 55.

Par exemple, le module de transfert 60 sélectionne un paquet de données P et génère le message de transfert MT. Le module de transfert 60 calcule, en outre, la somme de contrôle SC, la mémorise dans la troisième mémoire 65 et l'intègre dans le message de transfert MT.

Au cours de la sous-étape 160 de calcul, le module de calcul 43 du serveur embarqué 20 ayant reçu le message de transfert MT calcule la somme de contrôle SC à partir du paquet de données P contenu dans le message de transfert MT et compare la somme de contrôle SC calculée à la somme de contrôle SC contenue dans le message de transfert MT.

Si la somme de contrôle SC calculée est égale à la somme de contrôle SC contenue dans le message de transfert MT, la sous-étape 160 de calcul est suivie de la sous-étape 170 de renvoi. Sinon, la sous-étape 150 de transfert est réitérée avec le même paquet de données P.

Ensuite, au cours de la sous-étape 170 de renvoi, le module de communication radiofréquence 30 du serveur embarqué 20 ayant reçu le message de transfert MT transmet au serveur au sol 55 la somme de contrôle SC calculée par le module de calcul 43. Le module de comparaison compare alors la somme de contrôle SC calculée par le module de calcul 43 à la somme de contrôle SC mémorisée dans la troisième mémoire 65 du serveur au sol 55.

Si la somme de contrôle SC calculée par le module de calcul 43 est différente de la somme de contrôle SC mémorisée dans la troisième mémoire 65, la sous-étape 150 de transfert est réitérée avec le même paquet de données P.

Si la somme de contrôle SC calculée par le module de calcul 43 est égale à la somme de contrôle SC mémorisée dans la troisième mémoire 65, la sous-étape 150 de transfert est réitérée pour un nouveau paquet de données P. Cela est représenté sur la figure 2 par une flèche 175.

Ainsi, au cours de l'étape de transfert 110, les données de mise à jour Dm sont transférées au serveur embarqué 20 de chaque véhicule 10 de la liste. Par exemple, les données de mise à jour Dm transmises à chaque véhicule 10 de la liste sont identiques les unes aux autres.

A l'étape 120 de mémorisation, chaque paquet de données P est mémorisé dans la première mémoire 35 du serveur embarqué 20 ayant reçu le message de transfert MT. A l'issue de l'étape 120 de mémorisation, les données de mise à jour Dm sont donc mémorisées dans la première mémoire 35 de chaque véhicule 10 de la liste.

A l'issue de l'étape de mémorisation 120, la première mémoire 35 contient donc les premières données modifiées Mo1, les deuxièmes données modifiées Mo2 et les troisièmes données modifiées Mo3.

Au cours de l'étape 130 d'émission, le module de commande génère une commande de mise à jour. Le module de transfert 60 émet la commande de mise à jour, à travers le réseau étendu R2, à destination du serveur embarqué 20 de chaque véhicule 10 de la liste.

De préférence, la commande de mise à jour est émise simultanément, par le serveur au sol 55, à destination du serveur embarqué 20 de chaque véhicule 10 de la liste. Par exemple, la commande de mise à jour est un message émis à destination du véhicule 10 correspondant en réponse à un message émis périodiquement par le véhicule 10.

L'étape 130 d'émission est mise en œuvre après que les données de mise à jour Dm ont été mémorisées dans la première mémoire 35 de chaque véhicule 10 ayant reçu les données de mise à jour Dm. En d'autres termes, aucune commande de mise à jour n'est émise avant que chaque véhicule 10 de la liste n'ait reçu chacun des messages de transfert MT qui lui sont destinés. Par exemple, l'étape 130 d'émission est mise en œuvre uniquement si, pour chaque paquet de données P, la somme de contrôle SC calculée par le module de calcul 43 est égale à la somme de contrôle SC mémorisée dans la troisième mémoire 65.

Selon l'exemple de la figure 2, les données de mise à jour Dm sont donc mémorisées dans la première mémoire 35 de chaque véhicule 10 ayant reçu les données de mise à jour Dm avant que la commande de mise à jour ne soit émise. L'étape d'émission 130 est donc séparée de l'étape de transfert 110 d'une durée temporelle non nulle. Par exemple, le début de l'étape d'émission 130 est décalé de la fin de l'étape de transfert 110 d'une durée temporelle supérieure ou égale à 5 secondes.

Au cours de l'étape 140 de transmission, chaque serveur embarqué 20 ayant reçu la commande de mise à jour transmet les données modifiées Mo1, Mo2, Mo3 à au moins un du premier appareil 25A et du deuxième appareil 25B. Par exemple, chaque serveur embarqué 20 ayant reçu la commande de mise à jour transmet les données modifiées Mo1, Mo2, Mo3 à au moins un du premier appareil 25A, du deuxième appareil 25B et du troisième appareil 25C.

Selon l'exemple de la figure 2, chaque serveur embarqué 20 ayant reçu la commande de mise à jour transmet les données modifiées Mo1, Mo2, Mo3 au premier appareil 25A, au deuxième appareil 25B et au troisième appareil 25C. Cela est représenté sur la figure 2 par trois étapes 140 de transmission (une étape de transmission 140 pour chacun du premier appareil 25A, du deuxième appareil 25B et du troisième appareil 25C)

L'étape de transmission 140 comporte une sous-étape 180 d'envoi, une sous-étape 190 de renvoi et une sous-étape 200 de remplacement.

L'étape de transmission 140 est mise en œuvre successivement pour le premier appareil 25A et pour le deuxième appareil 25B selon une séquence prédéterminée. Par exemple, l'étape de transmission 140 est mise en œuvre pour le premier appareil 25A après que l'étape de transmission 140 mise en œuvre pour le deuxième appareil 25B est achevée. En particulier, les premières données modifiées Mo1 ne sont pas transmises au premier appareil 25A avant que les deuxièmes données modifiées Mo2 n'aient été intégralement mémorisées dans la deuxième mémoire 50 du deuxième appareil 25B.

En variante, l'étape de transmission 140 est mise en œuvre simultanément pour chacun du premier appareil 25A, du deuxième appareil 25B et du troisième appareil 25C.

Par exemple, l'étape 180 d'envoi est mise en œuvre successivement pour le premier appareil 25A et pour le deuxième appareil 25B selon une séquence prédéterminée. Par exemple, l'étape 180 d'envoi est mise en œuvre pour le deuxième appareil 25B, et l'étape 180 d'envoi est mise en œuvre pour le premier appareil 25A après que l'étape 200 de remplacement mise en œuvre pour le deuxième appareil 25B a été achevée.

En variante, l'étape 180 d'envoi est mise en œuvre simultanément pour chaque appareil 25A, 25B, 25C d'un même véhicule 10, mais l'étape 200 de remplacement est mise en œuvre pour chaque appareil 25A, 25B, 25C selon une séquence prédéterminée. Par exemple, l'étape 200 de remplacement est mise en œuvre pour le premier appareil 25A après que l'étape 200 de remplacement mise en œuvre pour le deuxième appareil 25B a été achevée.

Au cours de la sous-étape d'envoi 180, le serveur embarqué 20 de chaque véhicule 10 ayant reçu la commande de mise à jour envoie la demande de mise à jour à au moins un du premier appareil 25A et du deuxième appareil 25B du même véhicule 10. Plus précisément, le serveur embarqué 20 envoie la demande de mise à jour à chacun du premier appareil 25A, du deuxième appareil 25B et du troisième appareil 25C pour lesquels le serveur embarqué 20 a reçu, au cours de l'étape de transfert 110, les données modifiées Mo1, Mo2, Mo3. Selon l'exemple de la figure 2, le serveur embarqué 20 de chaque véhicule 10 ayant reçu la commande de mise à jour envoie donc la demande de mise à jour à chacun du premier appareil 25A et du deuxième appareil 25B et du troisième appareil 25C.

Selon l'exemple de la figure 2, au cours de la sous-étape d'envoi 180, le serveur embarqué 20 envoie une demande de mise à jour simultanément à chacun du premier appareil 25A, du deuxième appareil 25B et du troisième appareil 25C. En variante, le serveur embarqué 20 envoie les demandes de mise à jour au premier appareil 25A, au deuxième appareil 25B et au troisième appareil 25C selon un ordre prédéterminé. Par exemple, le serveur embarqué 20 attend que la sous-étape de remplacement 200 mise en œuvre pour le deuxième appareil 25B soit achevée pour envoyer la demande de mise à jour au premier appareil 25A.

Au cours de la sous-étape de renvoi 190, au moins un appareil 25A, 25B, 25C renvoie l'autorisation de mise à jour au serveur embarqué 20.

De préférence, au moins un appareil 25A, 25B, 25C ne renvoie l'autorisation de mise à jour que si le véhicule 10 est dans l'état inactif.

Dans l'exemple de la figure 2, le véhicule 10 est dans l'état actif lorsque le serveur embarqué 20 envoie la demande de mise à jour. Le premier appareil 25A et le deuxième appareil 25B renvoient alors les autorisations de mise à jour respectives au serveur embarqué 20. Le troisième appareil 25C, lui, ne renvoie pas l'autorisation de mise à jour. Le troisième appareil 25C attend que le véhicule 10 bascule dans l'état inactif avant de renvoyer l'autorisation de mise à jour. Cela est représenté sur la figure 2 par une flèche en traits mixtes.

Lors de la sous-étape de remplacement 200, chaque appareil 25A, 25B, 25C ayant renvoyé l'autorisation de mise à jour reçoit du serveur embarqué 20 les données modifiées Mo1, Mo2, Mo3 correspondantes à travers le réseau local R1. Les données initiales sont remplacées, dans la deuxième mémoire 50, par les données modifiées Mo1, Mo2, Mo3 correspondantes.

La sous-étape de remplacement 200 est mise en œuvre, pour chaque appareil 25A, 25B, 25C pour lequel des données modifiées Mo1, Mo2, Mo3 ont été reçues, après la réception, par le serveur embarqué 20, de l'autorisation de mise à jour renvoyée par l'appareil 25A, 25B, 25C considéré.

Lorsque les données modifiées Mo1, Mo2, Mo3 ont été mémorisées dans la deuxième mémoire 50 de l'appareil 25A, 25B, 25C correspondant, un message de fin MF est, par exemple, transmis au serveur embarqué 20 à travers le réseau local R1. Le message de fin MF contient, par exemple, un identifiant de l'appareil 25A, 25B, 25C considéré et la date d'émission du message de fin MF.

La sous-étape de remplacement 200 est, par exemple, mise en œuvre pour le premier appareil 25A après que le message de fin MF envoyé par le deuxième appareil 25B a été reçu par le serveur embarqué 20.

Grâce à l'invention, les données modifiées Mo1, Mo2, Mo3 sont mémorisées dans la mémoire 50 de chaque appareil 25A, 25B, 25C sans nécessiter l'intervention d'un technicien. La mise à jour des appareils 25A, 25b, 25C de la pluralité de véhicules 10 est donc plus rapide, et la disponibilité des véhicules 10 est améliorée.

En outre, les données modifiées Mo1, Mo2, Mo3 sont mémorisées dans chaque serveur embarqué 20 avant que la commande de mise à jour ne soit émise. Ainsi, les données modifiées Mo1, Mo2, Mo3 peuvent être transmises à chaque véhicule 10 avec un débit relativement faible, et la mise à jour des véhicules 10 est, néanmoins, quasi-simultanée. Il n'est pas nécessaire de prévoir un grand débit de transmission pour obtenir une telle mise à jour simultanée. En outre, peu de personnel est requis pour la mise à jour.

De plus, le procédé est peu sensible aux interruptions de connexion entre les serveurs embarquées 20 et le ou les serveurs au sol 55, puisque le transfert des données entre le serveur au sol 55 et les serveurs embarqués 20 a lieu au cours d'une étape préalable à la mise à jour des appareils 25A, 25B, 25C.

En outre, par l'utilisation de la somme de contrôle SC et d'un protocole FTP, l'étape de transfert 110 est robuste et peu sensible à d'éventuelles interruptions du réseau étendu R2, ou à des mises hors service momentanées du serveur au sol 55 ou du serveur embarqué 20 considérés.

L'étape de transmission 140 étant mise en œuvre pour le premier appareil 25A après qu'elle a été mise en œuvre pour le deuxième appareil 25B, le deuxième appareil 25B est en permanence apte à communiquer avec le premier appareil 25A. En particulier, des incompatibilités dues à des mises à jour différentes sont évitées.

Dans un deuxième exemple de mise en œuvre du procédé de mise à jour, les étapes 100 d'initialisation, 110 de transfert et 120 de mémorisation sont mises en œuvre pour chaque véhicule 10.

Au cours d'une première étape d'émission 130, la commande de mise à jour est envoyée à un unique véhicule 10 destiné à jouer le rôle de cobaye. L'étape de transmission 140 est alors mise en œuvre pour le véhicule cobaye 10. Ensuite, le bon fonctionnement du véhicule cobaye 10 est vérifié. Par exemple, chaque appareil 25A, 25B, 25C ayant été mis à jour dans le véhicule cobaye 10 est testé.

Si aucun problème n'est détecté au cours des tests, l'étape 130 d'émission et l'étape 140 de transmission sont mises en œuvre pour chaque autre véhicule 10 de la liste.

Si un problème est détecté au cours des tests, une deuxième étape de transfert est mise en œuvre. Au cours de la deuxième étape de transfert, des données rectifiées Dr sont transférées du serveur au sol 55 à chaque serveur embarqué 20. Les données rectifiées sont destinées à remplacer au moins partiellement les données de mise à jour Dm dans la première mémoire 35 de chaque serveur 20. En d'autres termes, les données rectifiées Dr comprennent un correctif des données de mise à jour Dm. Par exemple, les données rectifiées Dr sont destinées à remplacer partiellement l'une parmi les premières données modifiées Mo1, les deuxièmes données modifiées Mo2 et les troisièmes données modifiées Mo3.

L'étape 130 d'émission et l'étape 140 de transmission sont alors mises en œuvre pour chaque autre véhicule 10 de la liste, à partir des données de mise à jour Dm modifiées grâce aux données rectifiées Dr.

Le procédé permet alors de tester aisément la validité des données de mise à jour.

## Revendications

1. Procédé de mise à jour d'une pluralité de véhicules (10), chaque véhicule (10) comportant un serveur embarqué (20), un premier appareil (25A) électronique et au moins un deuxième appareil (25B) électronique, le serveur embarqué (20) comprenant une première mémoire (35) et un module de communication radiofréquence (30) et chacun du premier appareil (25A) et du deuxième appareil (25B) comprenant un contrôleur (45) et une deuxième mémoire (50) stockant un ensemble de données initiales, chaque serveur embarqué (20) étant relié à chacun du premier appareil (25A) et du deuxième appareil (25B) montés dans le même véhicule (10) par un réseau local de communication (R1) interne au véhicule (10), le procédé étant **caractérisé en ce qu'**il comporte les étapes suivantes :
- transfert (110) de données de mise à jour, à travers un réseau étendu de communication (R2) radiofréquence, depuis au moins un serveur au sol (55) vers les serveurs embarqués (20) des véhicules (10) de ladite pluralité, les données de mise à jour comportant des données modifiées destinées à être mémorisées par au moins un du premier appareil (25A) et du deuxième appareil (25B) de chaque véhicule (10) considéré,
- mémorisation (120) des données de mise à jour dans la première mémoire (35) de chaque véhicule (10),
- lorsque les données de mise à jour ont été mémorisées dans la première mémoire (35) de chaque véhicule (10), émission (130) à travers le réseau étendu (R2), par un serveur au sol (55), d'une commande de mise à jour à destination du serveur embarqué (20) de chaque véhicule (10), et
- transmission (140), par chaque serveur embarqué (20) ayant reçu la commande de mise à jour, des données modifiées à au moins un du premier appareil (25A) et du deuxième appareil (25B) à travers le réseau local (R1) correspondant, les données modifiées remplaçant, dans la deuxième mémoire (50) dudit appareil (25A, 25B), les données initiales.

2. Procédé selon la revendication 1, dans lequel l'étape de transmission (140) comprend les sous-étapes suivantes :
- envoi (180) d'une demande de mise à jour, par chaque serveur embarqué (20) ayant reçu la commande de mise à jour, à au moins un parmi le premier appareil (25A) et le deuxième appareil (25B) du même véhicule (10),
- renvoi (190), par ledit appareil (25A, 25B), d'une autorisation de mise à jour au serveur embarqué (20), et
- remplacement (200), dans ledit appareil (25A, 25B), des données d'origine par les données modifiées, la sous-étape de remplacement étant mise en œuvre après la réception, par le serveur embarqué (20), de l'autorisation de mise à jour correspondante.

3. Procédé selon la revendication 2, dans lequel un état actif et un état inactif sont définis pour chaque véhicule (10) de la pluralité, l'état inactif étant représentatif du fait que le véhicule n'est pas en mouvement et l'état actif étant représentatif du fait que le véhicule est en mouvement, au moins un du premier appareil (25A) et du deuxième appareil (25B) étant configuré pour, lors de la sous-étape de renvoi (190), renvoyer l'autorisation si le véhicule (10) est dans l'état inactif et, si ledit véhicule (10) est dans l'état actif, attendre que ledit véhicule (10) bascule dans l'état inactif pour renvoyer l'autorisation.

4. Procédé selon l'une quelconque des revendications 1 à 3, dans lequel, à l'étape d'émission (130), la commande de mise à jour est émise simultanément par le serveur au sol (55) à destination de chaque serveur embarqué (20) de la pluralité de véhicules (10).

5. Procédé selon l'une quelconque des revendications 1 à 4, dans lequel l'étape de transmission (140) est mise en œuvre successivement pour le premier appareil (25A) et le deuxième appareil (25B) d'un même véhicule (10) selon un ordre prédéterminé.

6. Procédé selon la revendication 5, dans lequel le premier appareil (25A) est configuré pour transmettre des informations entre le deuxième appareil (25B) et le serveur embarqué (20), les données de mise à jour comprenant des premières données modifiées destinées à être mémorisées dans la deuxième mémoire (50) du premier appareil (25A) et des deuxièmes données modifiées destinées à être mémorisées dans la deuxième mémoire (50) du deuxième appareil (25B), les deuxièmes données modifiées étant transmises au deuxième appareil (25B) au cours de l'étape de transmission (140), aucune première donnée modifiée n'étant transmise au premier appareil (25A) avant que les deuxièmes données modifiées n'aient été intégralement mémorisées par le deuxième appareil (25B).

7. Procédé selon l'une quelconque des revendications 1 à 6, dans lequel les données de mise à jour sont réparties en un ensemble de paquets de données et, au cours de l'étape de transfert (110), un ensemble de messages de transfert (MT) est émis (150) par le serveur au sol (55) à destination de chaque serveur embarqué (20), chaque message de transfert (MT) comportant un paquet de données et une somme de contrôle, le serveur embarqué (20) étant configuré pour calculer (160) chaque somme de contrôle à partir du paquet de données correspondant, et pour comparer la somme de contrôle calculée à la somme de contrôle contenue dans le message de transfert (MT), chaque somme de contrôle calculée par chaque serveur embarqué (20) étant, en outre transmise (170) au serveur au sol (55), le serveur au sol (55) comparant chaque somme de contrôle reçue à la somme de contrôle transférée avec le message de transfert (MT) correspondant.

8. Procédé selon l'une quelconque des revendications 1 à 7, dans lequel le début de l'étape d'émission (130) est décalé de la fin de l'étape de transfert (110) d'une durée temporelle supérieure ou égale à 5 secondes.

9. Ensemble formé d'une pluralité de véhicules ferroviaires (10) et d'un système (15) de gestion de la pluralité de véhicules ferroviaires (10), chaque véhicule ferroviaire (10) comportant un serveur embarqué (20), un premier appareil (25A) électronique et au moins un deuxième appareil (25B) électronique, le serveur embarqué (20) comprenant une première mémoire (35) et un module de communication (30) radiofréquence et chacun du premier appareil (25A) et du deuxième appareil (25B) comprenant un contrôleur (45) et une deuxième mémoire (50) stockant un ensemble de données initiales, chaque serveur embarqué (20) étant relié à chacun du premier appareil (25A) et du deuxième appareil (25B) par un réseau local de communication (R1) interne au véhicule (10), et le système de gestion (15) comportant un serveur au sol (55),
l'ensemble étant **caractérisé en ce que** le serveur au sol (55) est configuré pour :
- transférer, par communication radiofréquence, des données de mise à jour au serveur embarqué (20) de chaque véhicule (10) à travers un réseau étendu (R2), les données de mise à jour comportant des données modifiées destinées à être mémorisées dans la deuxième mémoire (50) d'au moins un du premier appareil (25A) et du deuxième appareil (25B), et pour
- émettre, à travers le réseau étendu (R2), une commande de mise à jour à destination du serveur embarqué (20) de chaque véhicule (10) de la pluralité de véhicules (10) lorsque les données de mise à jour ont été mémorisées dans la première mémoire (35) de chaque véhicule (10) ayant reçu les données de mise à jour,
et **en ce que** chaque serveur embarqué (20) est configuré pour :
- mémoriser les données de mise à jour dans la première mémoire (35), et
- à la suite de la réception de la commande de mise à jour, transmettre les données modifiées à au moins un parmi le premier appareil (25A) et le deuxième appareil (25B) à travers le réseau local (R1) correspondant, les données modifiées remplaçant, dans la deuxième mémoire dudit appareil (25A, 25B), les données initiales.

## Patentansprüche

1. Verfahren zum Aktualisieren einer Mehrzahl von Fahrzeugen (10), wobei jedes Fahrzeug (10) einen mitgeführten Server (20), ein erstes elektronisches Gerät (25A) und mindestens ein zweites elektronisches Gerät (25B) aufweist, wobei der mitgeführte Server (20) einen ersten Speicher (35) und ein Funkkommunikationsmodul (30) umfasst und jedes des ersten Gerätes (25A) und des zweiten Gerätes (25B) eine Steuereinheit (45) und einen zweiten Speicher (50) umfasst, der einen Anfangsdatenbestand speichert, wobei jeder mitgeführte Server (20) an jedes des ersten Gerätes (25A) und des zweiten Gerätes (25B), die in demselben Fahrzeug (10) montiert sind, über ein lokales, im Fahrzeug (10) installiertes Kommunikationsnetz (R1) angeschlossen ist, wobei das Verfahren **dadurch gekennzeichnet ist, dass** es die folgenden Schritte aufweist:
- Übertragen (110) von zu aktualisierenden Daten über ein flächendeckendes Funkkommunikationsnetz (R2) von mindestens einem bodenseitigen Server (55) zu den mitgeführten Servern (20) der Fahrzeuge (10) der Mehrzahl, wobei die zu aktualisierenden Daten modifizierte Daten aufweisen, die vorgesehen sind, von mindestens einem Gerät des ersten Gerätes (25A) und des zweiten Gerätes (25B) jedes betrachteten Fahrzeugs (10) gespeichert zu werden,
- Speichern (120) der zu aktualisierenden Daten in dem ersten Speicher (35) jedes Fahrzeugs (10),
- wenn die zu aktualisierenden Daten in dem ersten Speicher (35) jedes Fahrzeugs (10) gespeichert wurden, Senden (130) über das flächendeckenden Netz (R2) von einem bodenseitigen Server (55) einen Aktualisierungsbefehl an den mitgeführten Server (20) jedes Fahrzeugs (10) und
- Übersenden (140) von jedem mitgeführten Server (20), der den Aktualisierungsbefehl erhalten hat, von modifizierten Daten an mindestens ein Gerät des ersten Gerätes (25A) und des zweiten Gerätes (25B) über das entsprechende lokale Netz (R1), wobei die modifizierten Daten in dem zweiten Speicher (50) des Gerätes (25A, 25B) die ursprünglichen Daten ersetzen.

2. Verfahren nach Anspruch 1, bei dem der Schritt des Übersendens (140) die folgenden Unterschritte umfasst:
- Senden (180) einer Aktualisierungsanfrage von jedem mitgeführten Server (20), der den Aktualisierungsbefehl erhalten hat, an mindestens ein Gerät von dem ersten Gerät (25A) und dem zweiten Gerät (25B) desselben Fahrzeugs (10),
- Zurücksenden (190) einer Aktualisierungsautorisierung von dem Gerät (25A, 25B) an den mitgeführten Server (20) und
-- Ersetzen (200) von ursprünglichen Daten durch die modifizierten Daten in dem Gerät (25A, 25B), wobei der Unterschritt des Ersetzens von dem mitgeführten Server (20) nach dem Empfang der entsprechenden Aktualisierungsautorisierung durchgeführt wird.

3. Verfahren nach Anspruch 2, bei dem für jedes Fahrzeug (10) der Mehrzahl ein aktiver Zustand und ein inaktiver Zustand definiert ist, wobei der inaktive Zustand für die Tatsache repräsentativ ist, dass das Fahrzeug nicht in Bewegung ist, und der aktive Zustand für die Tatsache repräsentativ ist, dass das Fahrzeug in Bewegung ist, mindestens ein Gerät des ersten Gerätes (25A) und des zweiten Gerätes (25B) ausgebildet ist, während des Unterschrittes des Zurücksendens (190) die Autorisierung zurückzusenden, wenn das Fahrzeug (10) in dem inaktiven Zustand ist und wenn das Fahrzeug (10) in dem aktiven Zustand ist, zu warten, dass das Fahrzeug (10) in den inaktiven Zustand übergeht, um die Autorisierung zurückzusenden.

4. Verfahren nach einem beliebigen der Ansprüche 1 bis 3, bei dem bei dem Schritt des Sendens (130) der Aktualisierungsbefehl gleichzeitig von dem bodenseitigen Server (55) an jeden mitgeführten Server (20) der Mehrzahl von Fahrzeugen (10) gesendet wird.

5. Verfahren nach einem beliebigen der Ansprüche 1 bis 4, bei dem Schritt des Übersendens (140) für das erste Gerät (25A) und das zweite Gerät (25B) eines Fahrzeugs (10) gemäß einer vorbestimmten Reihenfolge aufeinanderfolgend durchgeführt wird.

6. Verfahren nach Anspruch 5, bei dem das erste Gerät (25A) ausgebildet ist, Informationen zwischen dem zweiten Gerät (25B) und dem mitgeführten Server (20) zu übersenden, wobei die Aktualisierungsdaten erste modifizierte Daten, die vorgesehen sind, in dem zweiten Speicher (50) des ersten Gerätes (25A) gespeichert zu werden, und zweiten modifizierte Daten, die vorgesehen sind in dem zweiten Speicher (50) des zweiten Gerätes (25B) gespeichert zu werden, umfassen, wobei die zweiten modifizierten Daten dem zweiten Gerät (25B) während des Schrittes des Übersendens (140) übersandt werden und keine ersten modifizierten Daten dem ersten Gerät (25A) übersandt werden, bevor nicht die zweiten modifizierten Daten integral von dem zweiten Gerät (25B) gespeichert sind.

7. Verfahren nach einem beliebigen der Ansprüche 1 bis 6, bei dem die Aktualisierungsdaten in einer Paketansammlung von Daten verteilt ist und während des Schritts des Übertragens (110) eine Ansammlung von Übertragungsnachrichten (MT) von dem bodenseitigen Server (55) an jeden mitgeführten Server (20) gesendet wird (150), wobei jede Übertragungsnachricht (MT) ein Datenpaket und eine Kontrollsumme aufweist, wobei der mitgeführte Server (20) ausgebildet ist, jede Kontrollsumme aus dem entsprechenden Datenpaket zu berechnen und die berechnete Kontrollsumme mit der Kontrollsumme zu vergleichen, die in der Übertragungsnachricht (MT) enthalten ist, wobei jede von jedem mitgeführten Server (20) berechnete Kontrollsumme außerdem dem bodenseitigen Server (55) übersandt wird (170) und der bodenseitige Server (55) jede empfangene Kontrollsumme mit der Kontrollsumme vergleicht, die mit der entsprechenden Übertragungsnachricht (MT) übertragen wurde.

8. Verfahren nach einem beliebigen der Ansprüche 1 bis 7, bei dem der Beginn des Schrittes des Sendens (130) von dem Ende des Schrittes des Übertragens (110) um eine Zeitdauer größer als oder gleich 5 Sekunden versetzt ist.

9. Verbund aus einer Mehrzahl von Schienenfahrzeugen (10) und einem System (15) zum Verwalten der Mehrzahl von Schienenfahrzeugen (10), wobei jedes Schienenfahrzeug (10) einen mitgeführten Server (20), ein erstes elektronisches Gerät (25A) und mindestens ein zweites elektronisches Gerät (25B) aufweist, wobei der mitgeführte Server (20) einen ersten Speicher (35) und ein Funkkommunikationsmodul (30) umfasst und jedes des ersten Gerätes (25A) und des zweiten Gerätes (25B) eine Steuereinheit (45) und einen zweiten Speicher (50) umfasst, der einen Anfangsdatenbestand speichert, wobei jeder mitgeführte Server (20) an jedes des ersten Gerätes (25A) und des zweiten Gerätes (25B), die in demselben Fahrzeug (10) montiert sind, über ein lokales, im Fahrzeug (10) installiertes Kommunikationsnetz (R1) angeschlossen ist, und das Verwaltungssystem (15) einen bodenseitigen Server (55) aufweist,
wobei der Verbund **dadurch gekennzeichnet ist, dass** der bodenseitige Server (55) ausgebildet ist:
- Aktualisierungsdaten an den mitgeführten Server (20) jedes Fahrzeugs (10) über ein flächendeckendes Netz (R2) durch Funkkommunikation zu übertragen, wobei die Aktualisierungsdaten modifizierte Daten aufweisen, die vorgesehen sind, in dem zweiten Speicher (50) von mindestens einem des ersten Gerätes (25A) und des zweiten Gerätes (25B) gespeichert zu werden, und
- einen Aktualisierungsbefehl an den mitgeführten Server (20) jedes Fahrzeugs (10) der Mehrzahl von Fahrzeugen (10) über das flächendeckende Netz (R2) zu senden, wenn die Aktualisierungsdaten in dem ersten Speicher (35) jedes Fahrzeugs (10), das die Aktualisierungsdaten empfangen hat, gespeichert wurden,
und dass jeder mitgeführte Server (20) ausgebildet ist:
- die Aktualisierungsdaten in dem ersten Speicher (35) zu speichern und
- im Anschluss an den Empfang des Aktualisierungsbefehls die modifizierten Daten an mindestens ein Gerät von dem ersten Gerät (25A) und dem zweiten Gerät (25B) über das entsprechende lokale Netz (R1) zu übersenden, wobei die modifizierten Daten in dem zweiten Speicher des Gerätes (25A, 25B) die ursprünglichen Daten ersetzen.

## Claims

1. A method for updating a plurality of vehicles (10), each vehicle (10) including an onboard server (20), a first electronic apparatus (25A) and at least one second electronic apparatus (25B), the onboard server (20) comprising a first memory (35) and a radiofrequency communication module (30) and each of the first apparatus (25A) and of the second apparatus (25B) comprising a controller (45) and a second memory (50) storing a set of initial data, each onboard server (20) being connected to each of the first apparatus (25A) and of the second apparatus (25B) mounted in the same vehicle (10) with a local internal communication network (R1) to the vehicle (10), the method being **characterized in that** it includes the following steps:
- transfer (110) of update data, through an extended radiofrequency communication network (R2), from at least one server on the ground (55) towards the onboard servers (20) of the vehicles (10) of said plurality, the updating data including modified data intended to be stored in memory by at least one of the first apparatus (25A) and of the second apparatus (25B) of each relevant vehicle (10),
- storing (120) updating data in the first memory (35) of each vehicle (10),
- when the updating data have been stored in the first memory (35) of each vehicle (10), the emitting (130) through the extended network (R2), by a server on the ground (55), an updating command intended for the onboard server (20) of each vehicle (10), and
- transmitting (140), for each onboard server (20) having received the updating command, modified data to at least one of the first apparatus (25A) and of the second apparatus (25B) through the corresponding local network (R1), the modified data replacing, in the second memory (50) of said apparatus (25A, 25B), the initial data.

2. The method according to claim 1, wherein the transmission step (140) comprises the following sub-steps:
- sending (180) an update request, for each onboard server (20) having received the updating command, to at least one from among the first apparatus (25A) and the second apparatus (25B) of the same vehicle (10),
- sending back (190), by said apparatus (25A, 25B) an updating authorization to the onboard server (20), and
- replacing (200), in said apparatus (25A, 25B), the initial data with modified data, the replacement sub-step being applied after receiving, by the onboard server (20), the corresponding updating authorization.

3. The method according to claim 2, wherein an active state and an inactive state are defined for each vehicle (10) of the plurality, the inactive state being representative of the fact that the vehicle is not in motion and the active state being representative of the fact that the vehicle is in motion, at least one of the first apparatus (25A) and of the second apparatus (25B) being configured for, during the sending back sub-step (190), sending back the authorization if the vehicle (10) is in the inactive state and, if said vehicle (10) is in the active state, waiting for said vehicle (10) to switch into the inactive state for sending back the authorization.

4. The method according to any of claims 1 to 3, wherein, in the emission step (130), the updating command is simultaneously emitted by the server on the ground (55) intended for each onboard server (20) of the plurality of vehicles (10).

5. The method according to any of claims 1 to 4, wherein the transmission step (140) is successively applied for the first apparatus (25A) and the second apparatus (25B) of a same vehicle (10) according to a predetermined order.

6. The method according to claim 5, wherein the first apparatus (25A) is configured for transmitting information between the second apparatus (25B) and the onboard server (20), the updating data comprising first modified data intended to be stored in the second memory (50) of the first apparatus (25A) and second modified data intended to be stored in the second memory (50) of the second apparatus (25B), the second modified data being transmitted to the second apparatus (25B) during the transmission step (140), no first modified datum being transmitted to the first apparatus (25A) before the second modified data have been entirely stored in memory by the second apparatus (25B).

7. The method according to any of claims 1 to 6, wherein the updating data are distributed in a set of data packets and, during the transfer step (110), a set of transfer messages (MT) is emitted (150) by the server on the ground (55) intended for each onboard server (20), each transfer message (MT) including a data packet and a check sum, the onboard server (20) being configured for calculating (160) each check sum from the corresponding data packet, and for comparing the calculated check sum with the check sum contained in the transfer message (MT), each check sum calculated by each onboard server (20) being further transmitted (170) to the server on the ground (55), the server on the ground (55) comparing each received check sum with the check sum transferred with the corresponding transfer message (MT).

8. The method according to any of claims 1 to 7, wherein the beginning of the emission step (130) is shifted from the end of the transfer step (110) by a time shift greater than or equal to 5 seconds.

9. An assembly formed with a plurality of railway vehicles (10) and with a system (15) for managing the plurality of railway vehicles (10), each railway vehicle (10) including an onboard server (20), a first electronic apparatus (25A) and at least one second electronic apparatus (25B), the onboard server (20) comprising a first memory (35) and a radiofrequency communication module (30) and each of the first apparatus (25A) and of the second apparatus (25B) comprising a controller (45) and a second memory (50) storing a set of initial data, each onboard server (20) being connected to each of the first apparatus (25A) and of the second apparatus (25B) through a local internal communication network (R1) to the vehicle (10), and the management system (15) including a server on the ground (55),
the assembly being **characterized in that** the server on the ground (55) is configured for:
- transferring, through a radiofrequency communication, updating data to the onboard server (20) of each vehicle (10) through an extended network (R2), the updating data including modified data intended to be stored in the second memory (50) of at least one of the first apparatus (25A) and of the second apparatus (25B), and for
- emitting, through the extended network (R2), an updating command intended for the onboard server (20) of each vehicle (10) of the plurality of vehicles (10) when the updating data have been stored in in the first memory (35) of each vehicle (10) having received the updating data,
and **in that** each onboard server (20) is configured for:
- storing the updating data in the first memory (35), and
- subsequently to receiving the updating command, transmitting the modified data to at least one from among the first apparatus (25A) and the second apparatus (25B) through the corresponding local network (R1), the modified data replacing, in the second memory of said apparatus (25A, 25B), the initial data.
